(19) Europäisches Patentamt
European Patent Office
Office européen des brevets

(11) **EP 1 421 474 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(21) Anmeldenummer: **02797611.7**

(22) Anmeldetag: **22.08.2002**

(51) Int Cl.:
***G06F 7/72*** *(2006.01)*

(86) Internationale Anmeldenummer:
**PCT/EP2002/009404**

(87) Internationale Veröffentlichungsnummer:
**WO 2003/021424 (13.03.2003 Gazette 2003/11)**

(54) **VERFAHREN UND VORRICHTUNG ZUM MODULAREN MULTIPLIZIEREN**

METHOD AND DEVICE FOR MODULAR MULTIPLICATION

PROCEDE ET DISPOSITIF POUR EFFECTUER UNE MULTIPLICATION MODULAIRE

(84) Benannte Vertragsstaaten:
**AT DE FR GB IT**

(30) Priorität: **29.08.2001 DE 10142155**

(43) Veröffentlichungstag der Anmeldung:
**26.05.2004 Patentblatt 2004/22**

(60) Teilanmeldung:
**05025780.7 / 1 628 206**

(73) Patentinhaber: **Infineon Technologies AG**
**81669 München (DE)**

(72) Erfinder:
• **ELBE, Astrid**
**81243 München (DE)**
• **JANSSEN, Norbert**
**81667 München (DE)**
• **SEDLAK, Holger**
**82054 Sauerlach (DE)**
• **SEIFERT, Jean-Pierre**
**81669 München (DE)**

(74) Vertreter: **Zimmermann, Tankred Klaus**
**Schoppe, Zimmermann, Stöckeler & Zinkler**
**Patentanwälte**
**Postfach 246**
**82043 Pullach bei München (DE)**

(56) Entgegenhaltungen:
**DE-A- 3 631 992     US-A- 5 349 551**

• **WALTER C D: "FASTER MODULAR MULTIPLICATION BY OPERAND SCALING" ADVANCES IN CRYPTOLOGY. SANTA BARBARA, AUG. 11 - 15, 1991, PROCEEDINGS OF THE CONFERENCE ON THEORY AND APPLICATIONS OF CRYPTOGRAPHIC TECHNIQUES (CRYPTO), BERLIN, SPRINGER, DE, 1991, Seiten 313-323, XP000269037**
• **WALTER C D: "SPACE/TIME TRADE-OFFS FOR HIGHER RADIX MODULAR MULTIPLICATION USING REPEATED ADDITION" IEEE TRANSACTIONS ON COMPUTERS, IEEE INC. NEW YORK, US, Bd. 46, Nr. 2, 1. Februar 1997 (1997-02-01), Seiten 139-141, XP000642786 ISSN: 0018-9340**
• **J-F DHEM: "Design of an efficient public-key cryptographic library for RISC-based smart cards" THESE SOUTENUE EN VUE DE L'OBTENTION DU GRADE DE DOCTEUR EN SCIENCES APPLIQUEES, Mai 1998 (1998-05), Seiten 11-56, XP002212065 Faculté des Sciences Appliquées Laboratoires de Microélectronique, UCL, Louvain-la-Neuve, BE**

EP 1 421 474 B1

**Beschreibung**

Die vorliegende Erfindung bezieht sich auf ein Verfahren und eine Vorrichtung zum modularen Multiplizieren eines Multiplikanden mit einem Multiplikator unter Verwendung eines Moduls und insbesondere auf das modulare Multiplizieren unter Verwendung eines Multiplikations-Vorausschau- und eines Reduktions-Vorausschau-Verfahrens.

Die Kryptographie ist eine der wesentlichen Anwendungen für die modulare Arithmetik. Ein wesentlicher Algorithmus für die Kryptographie ist der bekannte RSA-Algorithmus. Der RSA-Algorithmus baut auf einer modularen Exponentiation auf, welche folgendermaßen dargestellt werden kann:

$$C = M^d \bmod (N).$$

Hierbei ist C eine verschlüsselte Nachricht, M ist eine nicht-verschlüsselte Nachricht, d ist der geheime Schlüssel und N ist der Modul. Der Modul N wird üblicherweise durch Multiplikation zweier Primzahlen p und q erzeugt. Die modulare Exponentiation wird mittels des bekannten Square-and-Multiply-Algorithmus in Multiplikationen zerlegt. Hierzu wird der Exponent d in Zweierpotenzen zerlegt, so daß die modulare Exponentiation in mehrere modulare Multiplikationen zerlegt werden kann. Um die modulare Exponentiation rechenmäßig effizient implementieren zu können, wird die modulare Exponentiation daher in modulare Multiplikationen zerlegt, welche dann in Additionen zerlegt werden können.

Die DE 3631992 C2 offenbart ein Kryptographie-Verfahren, bei dem die modulare Multiplikation unter Verwendung eines Multiplikations-Vorausschau-Verfahrens und unter Verwendung eines Reduktions-Vorausschau-Verfahrens beschleunigt werden kann. Das in der DE 3631992 C2 beschriebene Verfahren wird auch als ZDN-Verfahren bezeichnet und anhand von Fig. 8 näher beschrieben. Nach einem Startschritt 900 des Algorithmus werden die globalen Variablen M, C und N initialisiert. Ziel ist es, folgende modulare Multiplikation zu berechnen:

$$Z = M * C \bmod N.$$

M wird als der Multiplikator bezeichnet, während C als der Multiplikand bezeichnet wird. Z ist das Ergebnis der modularen Multiplikation, während N der Modul ist.

Hierauf werden verschiedene lokale Variablen initialisiert, auf die zunächst nicht näher eingegangen werden braucht. Anschließend werden zwei Vorausschau-Verfahren angewandt. Im Multiplikations-Vorausschau-Verfahren GEN_MULT_LA wird unter Verwendung verschiedener Look-Ahead-Regeln ein Multiplikations-Verschiebungswert $s_z$ sowie ein Multiplikations-Vorausschau-Parameter a berechnet (910). Hierauf wird der gegenwärtige Inhalt des Z-Registers einer Links-Verschiebungs-Operation um $s_z$-Stellen unterzogen (920).

Im wesentlichen parallel dazu wird ein Reduktions-Vorausschau-Verfahren GEN_Mod_LA (930) durchgeführt, um einen Reduktionsverschiebungswert $s_N$ und einen Reduktions-Parameter b zu berechnen. In einem Schritt 940 wird dann der gegenwärtige Inhalt des Modul-Registers, also N, um $s_N$ Stellen nach links bzw. rechts verschoben, um einen verschobenen Modulwert N' zu erzeugen. Die zentrale Drei-Operanden-Operation des ZDN-Verfahrens findet in einem Schritt 950 statt. Hierbei wird das Zwischenergebnis Z' nach dem Schritt 920 zu dem Multiplikanden C, der mit dem Multiplikations-Vorausschau-Parameter a multipliziert ist, und zu dem verschobenen Modul N', der mit dem Reduktions-Vorausschau-Parameter b multipliziert ist, addiert. Je nach aktueller Situation können die Vorausschau-Parameter a und b einen Wert von +1, 0 oder -1 haben.

Ein typischer Fall besteht darin, daß der Multiplikations-Vorausschäu-Parameter a +1 beträgt, und daß der Reduktion-Vorausschau-Parameter b -1 beträgt, so daß zu einem verschobenen Zwischenergebnis Z' der Multiplikand C hinzu addiert wird, und der verschobene Modul N' davon subtrahiert wird, a wird einen Wert gleich 0 haben, wenn das Multiplikations-Vorausschau-Verfahren mehr als eine voreingestellte Anzahl von einzelnen Links-Verschiebungen zulassen würde, also wenn $s_z$ größer als der maximal zulässige Wert von $s_z$ ist, der auch als k bezeichnet wird. Für den Fall, daß a gleich 0 ist, und daß Z' aufgrund der vorausgehenden modularen Reduktion, also der vorausgehenden Subtraktion des verschobenen Moduls noch ziemlich klein ist, und insbesondere kleiner als der verschobene Modul N' ist, muß keine Reduktion stattfinden, so daß der Parameter b gleich 0 ist.

Die Schritte 910 bis 950 werden so lange durchgeführt, bis sämtliche Stellen des Multiplikanden abgearbeitet sind, also bis m gleich 0 ist, und bis auch ein Parameter n gleich 0 ist, welcher angibt, ob der verschobene Modul N' noch größer als der ursprüngliche Modul N ist, oder ob trotz der Tatsache, daß bereits sämtliche Stellen des Multiplikanden abgearbeitet sind, noch weitere Reduktionsschritte durch Subtrahieren des Moduls von Z durchgeführt werden müssen.

Abschließend wird noch bestimmt, ob Z kleiner als 0 ist. Falls dies der Fall ist, muß, um eine abschließende Reduktion zu erreichen, der Modul N zu Z hinzuaddiert werden, damit schließlich das korrekte Ergebnis Z der modularen Multiplikation erhalten wird. In einem Schritt 960 ist die modulare Multiplikation mittels des ZDN-Verfahrens beendet.

Der Multiplikations-Verschiebungswert $s_Z$ sowie der Multiplikations-Parameter a, welche im Schritt 910 durch den Multiplikations-Vorausschau-Algorithmus berechnet werden, ergeben sich durch die Topologie des Multiplikators sowie durch die eingesetzten Vorausschau-Regeln, die in der DE 3631992 C2 beschrieben sind.

Der Reduktions-Verschiebungswert $s_N$ und der Reduktions-Parameter b werden, wie es ebenfalls in der DE 3631992 C2 beschrieben ist, durch Vergleich des gegenwärtigen Inhalts des Z-Registers mit einem Wert 2/3 mal N bestimmt. Aufgrund dieses Vergleiches trägt das ZDN-Verfahren seinen Namen (ZDN = Zwei Drittel N).

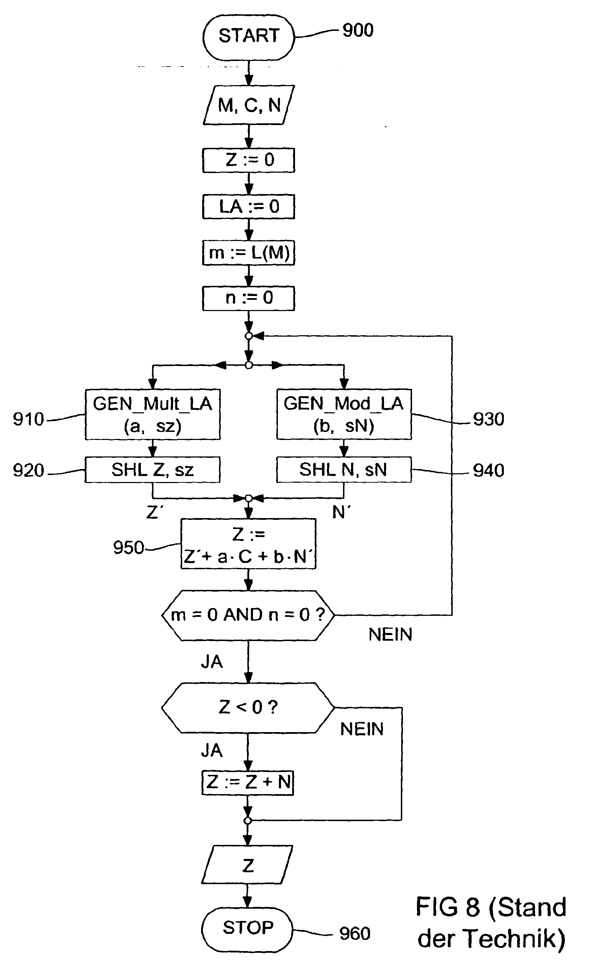

Das ZDN-Verfahren, wie es in Fig. 8 dargestellt ist, führt die modulare Multiplikation auf eine Drei-Operanden-Addition (Block 950 in Fig. 8) zurück, wobei zur Steigerung der Rechenzeiteffizienz das Multiplikations-Vorausschau-Verfahren und damit einhergehend das Reduktions-Vorausschau-Verfahren eingesetzt werden.

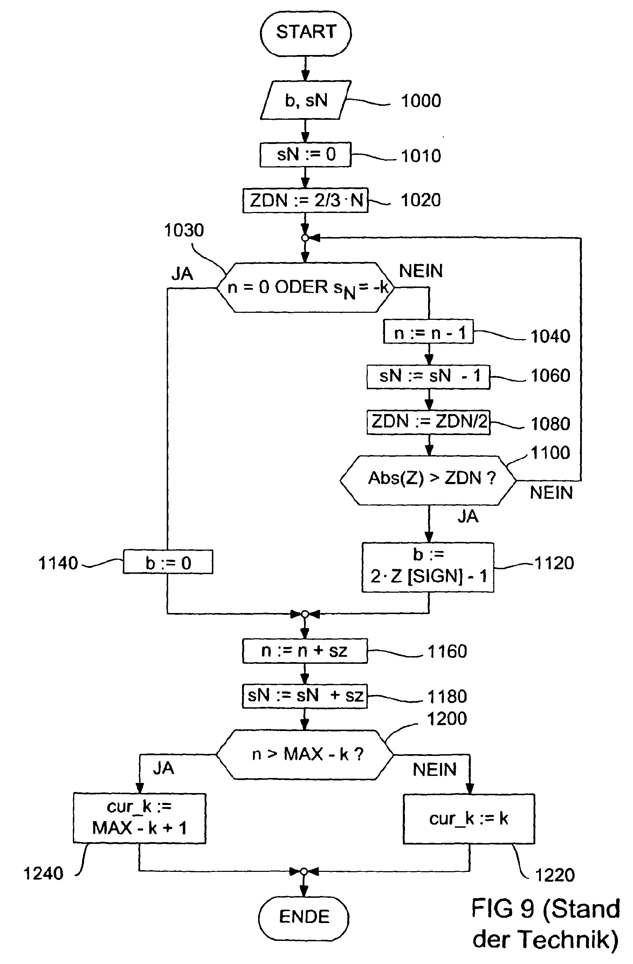

Im nachfolgenden wird anhand von Fig. 9 näher auf das Reduktions-Vorausschau-Verfahren eingegangen, das im Block 930 von Fig. 8 ausgeführt wird. Zunächst wird in einem Block 1000 eine Reservierung für die lokalen Variablen, d. h. den Reduktions-Vorausschau-Parameter b und den Reduktions-Verschiebungswert $s_N$, durchgeführt. In einem Block 1010 wird der Reduktions-Verschiebungswert $s_N$ auf Null initialisiert. Hierauf wird in einem Block 1020 der Wert ZDN berechnet, der gleich 2/3 des Moduls N ist. Dieser Wert, der im Block 1020 bestimmt wird, wird in einem eigenen Register, dem ZDN-Register, auf dem Kryptocoprozessor abgespeichert.

In einem Block 1030 wird dann bestimmt, ob die Variable n gleich 0 ist, oder ob der Verschiebungswert $s_N$ gleich -k ist, k ist ein Wert, welcher den maximalen Verschiebungswert, welcher durch die Hardware vorgegeben ist, definiert. Im ersten Durchgang wird der Block 1030 mit NEIN beantwortet, so daß in einem Block 1040 der Parameter n dekrementiert wird, und daß in einem Block 1060 auch der Reduktions-Verschiebungswert um 1 dekrementiert wird. Dann wird in einem Block 1080 die Variable ZDN neu belegt, nämlich mit ihrem halben Wert, was durch eine Rechts-Verschiebung des im ZDN-Register stehenden Werts ohne weiteres erreicht werden kann. In einem Block 1100 wird dann festgestellt, ob der Absolutwert des aktuellen Zwischenergebnisses größer als der im ZDN-Register stehende Wert ist.

Diese Vergleichsoperation im Block 1100 ist die zentrale Operation des Reduktions-Vorausschau-Verfahrens. Wird die Frage mit JA beantwortet, so ist die Iteration beendet und der Reduktions-Vorausschau-Parameter b wird, wie es im Block 1120 dargestellt ist, belegt. Wird die im Block 1100 zu beantwortende Frage dagegen mit NEIN beantwortet, so wird iterativ wieder zurückgesprungen, um die aktuellen Werte von n und $s_N$ im Block 1030 zu untersuchen. Wird der Block 1030 irgendwann in der Iteration mit JA beantwortet, so wird zu einem Block 1140 gesprungen, in dem der Reduktions-Parameter b zu Null gesetzt wird. In der in Fig. 8 im Block 950 dargestellten Drei-Operanden-Operation führt dies dazu, daß kein Modul addiert oder subtrahiert wird, was bedeutet, daß das Zwischenergebnis Z so klein war, daß keine modulare Reduktion erforderlich war. In einem Block 1160 wird dann die Variable n neu belegt, wobei dann in einem Block 1180 schließlich der Reduktions-Verschiebungs-Wert $s_N$ berechnet wird, welcher in einem Block 940 von Fig. 8 benötigt wird, um die Linksverschiebung des Moduls durchzuführen, um einen verschobenen Modul zu erreichen.

In den Blöcken 1200, 1220 und 1240 werden schließlich die aktuellen Werte von n und k hinsichtlich weiterer Variablen MAX und cur_k untersucht, um die aktuelle Belegung des N-Registers zu untersuchen, um sicherzustellen, daß keine Registerüberschreitungen stattfinden. Die näheren Details sind für die vorliegende Erfindung nicht von Bedeutung, sind jedoch in der DE 3631992 C2 detailliert beschrieben.

Der ZDN-Algorithmus besteht im wesentlichen aus folgenden Schritten:

1. Berechnen des Multiplikations-Verschiebungs-Werts $s_Z$ und des Multiplikations-Vorausschau-Parameters a.

2. Verschieben des Inhalts des Z-Registers um $s_Z$ Stellen, d. h. Multiplizieren des Zwischenergebnisses des vorherigen Iterationsschritts mit dem Faktor $2^{s_Z}$.

3. Berechnen des Reduktions-Verschiebungswerts $s_N$ und optional des Reduktions-Vorausschau-Parameters b.

4. Verschieben des Inhalts des N-Registers um $s_N$ Stellen, d. h. Multiplizieren des aktuellen Moduls mit dem Faktor $2^{s_N}$.

5. Durchführen der Drei-Operanden-Addition, um ein aktualisiertes Zwischenergebnis Z zu erhalten gemäß folgender Bestimmungsgleichung $2^{s_Z} Z + a \, c + b \, 2^{s_N} N$.

Je nach Multiplikations-Vorausschau-Algorithmus ist eine Berechnung von Multiplikations-Vorausschau-Parametern (a) und Reduktions-Vorausschau-Parametern (b) erforderlich. Diese Parameter können, wie es bekannt ist, Werte von -1,0 und +1 einnehmen.

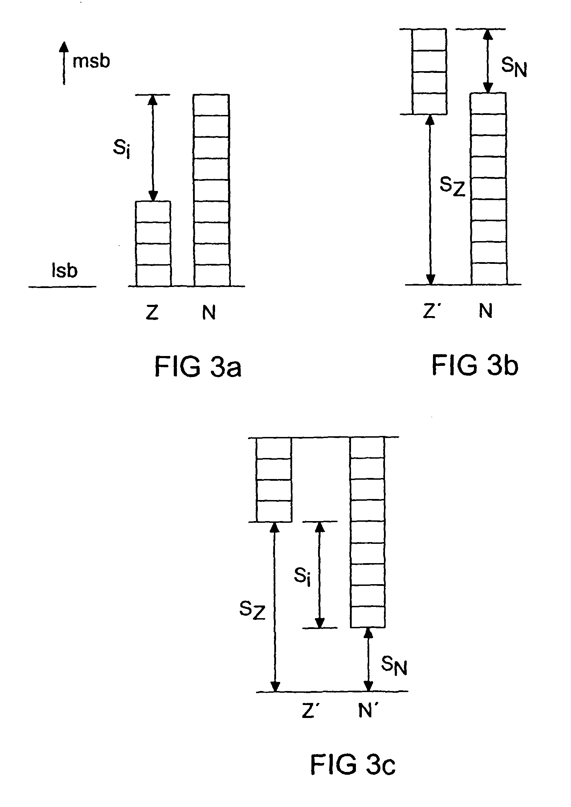

Je nach Implementation kann der Reduktions-Verschiebungs-Wert $s_N$ mittels eines Hilfs-Verschiebungs-Werts $s_i$ berechnet werden, wie es anhand der Fig. 3a bis 3c erläutert werden wird. In diesem Fall wird zur Berechnung des Reduktions-Verschiebungs-Parameters $s_N$ zunächst der Hilfs-Verschiebungs-Wert $s_i$, also der Unterschied der höchstwertigen Bits des aktuellen Z-Register-Eintrags und des aktuellen Modul-Register-Eintrags, berechnet, um dann aus der Differenz des Multiplikations-Verschiebungs-Werts $s_z$ und des Hilfs-Verschiebungs-Werts $s_i$ den Reduktions-Verschiebungs-Wert $s_N$ zu berechnen.

Wie es aus der DE 3631992 C2 bekannt ist, ist die Zeit, die benötigt wird, um eine modulare Multiplikation M C mod N zu berechnen, proportional zu einem Drittel der Länge des Multiplikators M in Bits. Dies bedeutet, daß die Anzahl der Zyklen, um die modulare Multiplikation zu berechnen, gleich L(M)/3 ist.

Obgleich unter Verwendung des Multiplikations-Vorausschau-Verfahrens und des parallel ablaufenden Reduktions-Vorausschau-Verfahrens bereits eine wesentliche Beschleunigung der modularen Multiplikation erreicht werden kann, besteht dennoch der Wunsch, die modulare Multiplikation weiter zu beschleunigen, was insbesondere dann an Bedeutung gewinnt, wenn die Länge des Multiplikators in Bits immer weiter zunimmt, was insbesondere beim RSA-Algorithmus zu einer verbesserten Sicherheit des Algorithmus führen kann.

Des weiteren ist eine schnelle Berechnung der modularen Multiplikation nicht nur beispielsweise bei Chip-Karten von Bedeutung, wo die Akzeptanz eines Verschlüsselungskonzepts auch davon abhängt, wie lange ein Benutzer warten muß, sondern auch in sogenannten Trusted Centern von Bedeutung, wo beispielsweise 1.000 RSA-Verschlüsselungen pro Sekunde durchzuführen sind. Solche Trusted Centers treten dort auf, wo ein Security-Server eine Vielzahl von Client-Anfragen bedienen muß.

Die Aufgabe der vorliegenden Erfindung besteht darin, ein schnelleres Verfahren und eine schnellere Vorrichtung zum modularen Multiplizieren zu schaffen.

Diese Aufgabe wird durch ein Verfahren zum modularen Multiplizieren gemäß Patentanspruch 1 oder durch eine Vorrichtung zum modularen Multiplizieren gemäß Patentanspruch 10 geschaffen.

Der vorliegenden Erfindung liegt die Erkenntnis zugrunde, daß die Anzahl der Zyklen zum Berechnen der modularen Multiplikation verringert werden kann, wenn statt eines Drei-Operanden-Addierers, wie im Stand der Technik, ein Multi-Operanden-Addierer eingesetzt wird, der für fünf, sieben oder noch mehr Operanden geeignet ist. Im Gegensatz zum herkömmlichen ZDN-Verfahren, bei dem immer ein Iterationsschritt nach dem anderen ausgeführt wird, werden gemäß der vorliegenden Erfindung zwei, drei oder mehr Iterationsschritte auf einmal ausgeführt. Statt eines Drei-Operanden-Addierers, wie im Stand der Technik, ist hierzu ein Fünf-, Sieben- oder noch höherwertiger Operanden-Addierer von Nöten, dem als Operanden nicht nur das letzte Zwischenergebnis Z, der Multiplikand C und der Modul zugeführt werden, sondern je nach Ausführung, d. h. ob ein Fünf-Operanden-Addierer, ein Sieben-Operanden-Addierer oder ein noch höherer Addierer verwendet wird, ein verschobenes Zwischenergebnis, ein Multiplikand und ein verschobener Multiplikand sowie ein um zwei verschiedene Verschiebungswerte verschobener Modul etc. zugeführt wird. Die Art und Weise, mit der das Zwischenergebnis aus dem vorherigen Iterationsschritt, der Modul oder ein von dem Modul abgeleiteter Wert und der Multiplikand C jeweils unter Verwendung der Multiplikations-Verschiebungs-Werte und der Reduktions-Verschiebungs-Werte beaufschlagt werden, hängt von der ZDN-Bestimmungsgleichung ab. Die Beaufschlagungswerte ergeben sich dadurch, wenn in die ZDN-Gleichung die Gleichung für das aktualisierte Zwischenergebnis aus dem vorherigen Schritt eingesetzt wird, um unter Verwendung des erfindungsgemäßen Addierers für fünf, sieben oder noch mehr Operanden das aktualisierte Zwischenergebnis Z für den übernächsten, überübernächsten oder noch höheren herkömmlichen ZDN-Schritt zu berechnen.

Hierzu werden zunächst zwei oder mehr Multiplikations-Verschiebungs-Werte $s_Z^1$ bis $s_Z^f$ mittels eines Multiplikations-Vorausschau-Verfahrens unter Berücksichtigung von f Blöcken von Stellen des Multiplikators, welche aneinander angrenzen, ermittelt. Darüber hinaus werden f Reduktions-Verschiebungs-Werte $s_N^1$ bis $s_N^f$ mittels eines Reduktions-Vorausschau-Verfahrens berechnet, und zwar für die selben f Blöcken von Stellen des Multiplikators.

Das Zwischenergebnis Z aus einem vorherigen Iterationsschritt, der Modul oder ein von dem Modul abgeleiteter Wert und der Multiplikand werden mit den f Multiplikations-Verschiebungs-Werten und den f Reduktions-Verschiebungs-Werten beaufschlagt, um die 2f+1 Operanden zu erhalten, welche dann mittels des (2f+1)-Operanden-Addierers zusammengefaßt werden, um ein aktualisiertes Zwischenergebnis für einen auf den vorherigen Iterationsschritt folgenden Iterationsschritt zu erhalten, wobei die Iteration so lange fortgesetzt wird, bis sämtliche Stellen des Multiplikators abgearbeitet sind.

Wenn ein Multiplikations-Vorausschau-Verfahren verwendet wird, bei dem die Multiplikations-Verschiebungs-Werte für die f Blöcke von aneinander angrenzenden Stellen des Multiplikators voneinander unabhängig sind, ist es ohne weiteres möglich, mehrere Multiplikations-Verschiebungs-Werte im voraus zu berechnen.

Die f Reduktions-Verschiebungs-Werte $s_N^1$ bis $s_N^f$ hängen typischerweise von früheren Reduktions-Verschiebungs-Werten und früheren Mulitplikations-Verschiebungs-Werten ab. So hängt der erste Reduktions-Verschiebungs-Wert $s_N^1$ vom ersten Multiplikations-Verschiebungs-Wert $s_Z^1$ über den Hilfs-Verschiebungs-Wert $s_i^1$ ab. Der zweite Reduktions-Verschiebungs-Wert $s_N^2$ hängt jedoch neben dem zweiten Multiplikations-Verschiebungs-Wert $s_Z^2$ auch

von der Summe des um $s_Z^1$ verschobenen Zwischenergebnisses Z, des Multiplikanden C multipliziert mit dem Multiplikations-Vorausschau-Parameter aus dem ersten Schritt $a^1$ und dem um $s_N^1$ verschobenen Modul N multipliziert mit dem Reduktions-Vorausschau-Parameter $b^1$ aus dem vorherigen Schritt ab. Zur Berechnung des Reduktions-Verschiebungs-Parameters $s_N^2$ und des Reduktions-Vorausschau-Parameters $b^2$ könnte die vorher aufgeführte Summe, von der diese Werte abhängen, ermittelt werden. Um den Reduktions-Vorausschau-Parameter $s_N^2$ zu berechnen, wird jedoch nicht die gesamte Summe benötigt, sondern lediglich das höchstwertige Bit dieser Summe, um den korrekten Reduktions-Verschiebungs-Parameter zu erhalten, damit eine korrekte Reduktion parallel zur Multiplikation stattfindet. Daher wird es bevorzugt, die Summe lediglich näherungsweise zu berechnen, was dadurch geschehen kann, daß auf die Miteinbeziehung des Multiplikanden in die Summe verzichtet wird, und dass eine Modultransformation durchgeführt wird, um einige wenige der höchstwertigen Bits der oben genannten Summe schnell berechnen zu können.

Bevorzugte Ausführungsbeispiele der vorliegenden Erfindung werden nachfolgend bezugnehmend auf die beiliegenden Zeichnungen näher erläutert. Es zeigen:

Fig. 1      ein Blockschaltbild einer erfindungsgemäßen Vorrichtung zum modularen Multiplizieren mit einem (2f+1)-Operanden-Addierer;

Fig. 2      ein Blockschaltbild eines Ausführungsbeispiels mit einem Fünf-Operanden-Addierer;

Fig. 3a bis 3c      eine schematische Darstellung des Zusammenhangs zwischen dem Multiplikations-Verschiebungs-Wert $s_Z$, dem Hilfs-Verschiebungs-Wert $s_i$ und dem Reduktions-Verschiebungs-Wert $s_N$;

Fig. 4      ein Ablaufdiagramm für die modulare Multiplikation mit einer Modultransformation;

Fig. 5      die Aufteilung eines Moduls N in einen ersten Abschnitt $N_T$ von Bits und in einen zweiten Abschnitt $N_R$ von Bits;

Fig. 6      die Aufteilung des transformierten Moduls $N^T$ in einen ersten Abschnitt von Stellen mit der Länge L und die verbleibenden Stellen;

Fig. 7      eine Darstellung der Stellen des 2/3-fachen des transformierten Moduls $N^T$;

Fig. 8      eine Flußdiagrammdarstellung des bekannten ZDN-Verfahrens; und

Fig. 9      eine Flußdiagrammdarstellung des bekannten Reduktions-Vorausschau-Verfahrens.

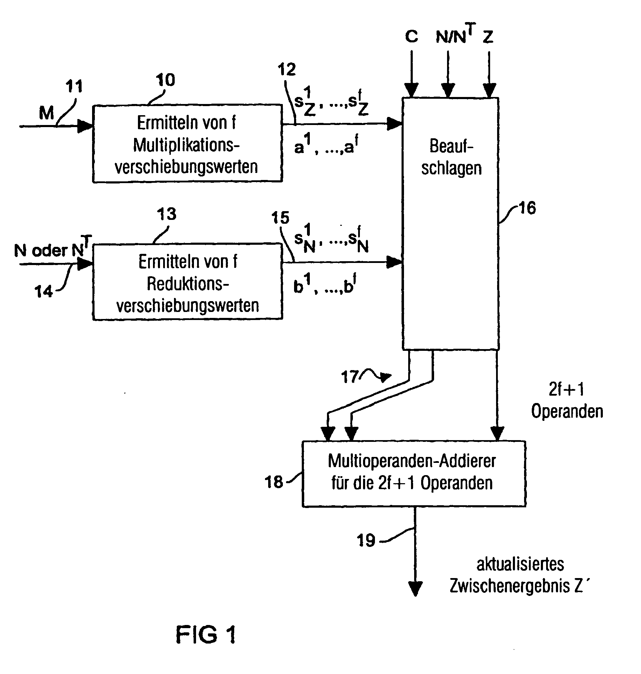

Fig. 1 zeigt ein Blockschaltbild einer erfindungsgemäßen Vorrichtung zum modularen Multiplizieren eines Multiplikanden (C) mit einem Multiplikator (M), der aus einer Mehrzahl von Stellen besteht, unter Verwendung eines Moduls (N). Die Vorrichtung umfaßt zunächst eine Einrichtung 10 zum Ermitteln von f Multiplikations-Verschiebungs-Werten. Wie es in der DE 3631992 C2 ausgeführt ist, wird hierzu der Multiplikator M, der über einen Multiplikatoreingang 11 der Einrichtung 10 zugeführt wird, abgescannt. An einem Ausgang 12 liefert die Einrichtung 10 Multiplikations-Verschiebungs-Werte $s_Z^1$, ..., $s_Z^f$ sowie, wenn der Multiplikations-Lookahead-Algorithmus verwendet wird, der in der DE 3631992 C2 offenbart ist, Multiplikations-Vorausschau-Parameter $a^1$, ..., $a^f$. Ein Multiplikations-Verschiebungs-Wert $s_Z^i$ ist einem Block von Stellen des Multiplikators M zugeordnet, wobei der Block von Stellen durch den verwendeten Lookahead-Algorithmus bestimmt ist. Für aufeinanderfolgende f Blöcke von Stellen des Multiplikators M ergeben sich somit die am Ausgang 12 der Einrichtung 10 aufgeführten Größen $s_Z^i$ und $a^i$.

Die erfindungsgemäße Vorrichtung umfaßt ferner eine Einrichtung 13 zum Ermitteln von f Reduktions-Verschiebungs-Werten. Der Einrichtung 13 wird über einen Moduleingang 14 der Modul N oder ein transformierter Modul $N^T$ zugeführt, wobei der transformierte Modul $N^T$ ein Beispiel für einen von dem Modul N abgeleiteten Wert darstellt. Es sei darauf hingewiesen, daß der über den Eingang 14 zugeführte Modulwert N oder $N^T$ nicht unbedingt der ursprüngliche Modul N oder der ursprüngliche transformierte Modul $N^T$ der modularen Multiplikation ist. Dies wird in der Tat nur beim ersten Iterationsschritt zutreffen, also wenn der erste Block von Stellen des Multiplikators M "verarbeitet" wird. Bereits beim zweiten Iterationsschritt ist der über den Moduleingang 14 zugeführte Modulwert der um $s_N^i$ verschobene ursprüngliche Modul oder der um $s_N^f$ verschobene ursprüngliche transformierte Modul $N^T$.

Die Einrichtung 13 liefert an ihrem Ausgang 15 Reduktions-Verschiebungs-Parameter $s_N^1$ bis $s_N^f$ sowie Reduktions-Verschiebungs-Parameter $b^1$ bis $b^f$.

Die Ausgänge 12 und 15 der Einrichtungen 10 und 13 werden einer Einrichtung 16 zum Bearbeiten bzw. Beaufschlagen zugeführt. Die Einrichtung 16 beaufschlagt den Multiplikanden C, der Modul N bzw. der transformierte Modul $N^T$ bzw. die entsprechenden Werte nach einem Iterationsschritt, wie es bezüglich des Eingangs 14 ausgeführt worden ist, sowie ein Zwischenergebnis Z eines vorherigen Iterationsschritts so, daß 2f+1 Operanden 17 gebildet werden, die dann mittels eines Multioperanden-Addierers 18 für die 2f+1 Operanden aufaddiert bzw. zusammengefaßt werden, um ein aktualisiertes Zwischenergebnis Z' zu erhalten. Das aktualisierte Zwischenergebnis Z' stellt dann in einem nächsten Iterationsschritt wieder die Eingangsgröße Z in die Einrichtung 16 zum Beaufschlagen dar.

Die Iteration wird so lange fortgeführt, bis sämtliche Stellen des Multiplikators M abgearbeitet sind. Das dann erhaltene aktualisierte Zwischenergebnis Z' an dem Ausgang 19 der Einrichtung 18 stellt dann das Ergebnis der modularen Multiplikation dar. Es sei darauf hingewiesen, daß unter Umständen noch eine Reduktion unter Verwendung des ursprünglichen Moduls N stattfinden muß, um das aktualisierte Zwischenergebnis Z' des letzten Iterationsschritts in die Restklasse des ursprünglichen Moduls N zurück zu führen. Wurde eine Modultransformation durchgeführt, so muß, um das endgültige Ergebnis der modularen Multiplikation auszurechnen, auch wieder eine Modulrücktransformation stattfinden.

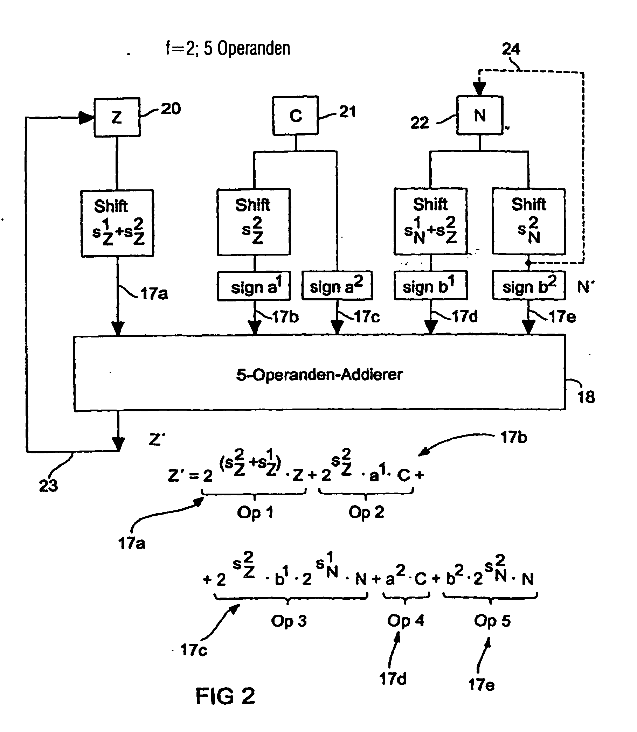

Im nachfolgenden wird auf Fig. 2 eingegangen, um den Aufbau der Einrichtung 16 zum Beaufschlagen von Fig. 1 für den Fall f = 2, d. h. für den Fall eine Fünf-Operanden-Addierers, darzustellen. Bevor näher auf Fig. 2 eingegangen wird, sei darauf hingewiesen, daß Multioperandenaddierer im Kapitel 8 des Fachbuchs "Computer Arithmetic, Algorithms and Hardware Designs", Bahrooz Parhami, Oxford, ISBN 0-19-512583-5, beschrieben sind.

Die Bestimmungsgleichung des bekannten ZDN-Verfahrens mit einem Drei-Operanden-Addierer lautet folgendermaßen:

$$Z' = 2^{\wedge}s_Z \; Z + a \; C + b \; 2^{\wedge}s_N \; N.$$

Z' ist das aktualisierte Zwischenergebnis. Z ist das Zwischenergebnis des vorhergehenden Iterationsschritts. $s_Z$ ist der Multiplikations-Verschiebungs-Wert, der von den gerade betrachteten Stellen des Multiplikators abhängt. a ist der Multiplikations-Vorausschau-Parameter, der mit dem Multiplikations-Verschiebungs-Wert $s_Z$ korrespondiert. b ist der Reduktions-Vorausschau-Parameter, der mit dem Reduktions-Verschiebungswert $s_N$ korrespondiert, während N den Inhalt des Modulregisters aus dem vorausgehenden Iterationsschritt darstellt.

Erfindungsgemäß wird nunmehr von der Drei-Operanden-Summe abgegangen und eine Summe mit mehr als drei Operanden gebildet, um zwei oder mehr (f) Schritte des bekannten ZDN-Verfahrens in einen einzigen Iterationsschritt des erfindungsgemäßen Verfahrens zusammenzufassen.

Im nachfolgenden wird dies anhand von f = 2 dargestellt. Die Gleichung für das aktualisierte Zwischenergebnis Z' nach einem Iterationsschritt gemäß dem erfindungsgemäßen Verfahren lautet folgendermaßen:

$$Z' = 2^{\wedge}s_Z^2 \; (2^{\wedge}s_Z^1 \; Z + a^1 \; C + b^1 \; 2^{\wedge}s_N^1 \; N) + a^2 \; C + b^2 \; 2^{\wedge}s_N^2 \; N.$$

Wenn diese Gleichung entsprechen zusammengefaßt wird, ergibt sich folgende Bestimmungsgleichung für das aktualisierte Zwischenergebnis Z':

$$Z' = 2^{\wedge}(s_Z^2 + s_Z^1) \; Z + 2^{\wedge}s_Z^2 \; a^1 \; C + (2^{\wedge}(s_Z^2 + s_N^1) \; b^1 \; N + a^2 \; C + b^2 \; 2^{\wedge}s_N^2 \; N.$$

Die Exponenten zur Basis 2 in der obigen Gleichung können, wie es bekannt ist, durch Verschiebung der entsprechenden Registerinhalte um die durch die Exponenten gegebene Anzahl von Stellen nach links oder rechts bewirkt werden. Eine mögliche schaltungsmäßige Implementation der obigen Gleichung ist in Fig. 2 dargestellt. Ein erster Operand 17a wird durch Verschieben des Registerinhalts Z 20 um $s_Z^1 + s_Z^2$ Stellen erreicht. Ein zweiter Operand 17b wird dadurch erhalten, daß der Inhalt des Multiplikandenregisters 21 um $s_Z^2$ Stellen verschoben wird und ferner mit dem Vorzeichen des Multiplikations-Vorausschau-Parameters $a^1$ beaufschlagt wird. Analog dazu wird ein dritter Operand 17c erhalten, indem der Inhalt des Multiplikandenregisters 21 mit dem Vorzeichen des Multiplikations-Vorausschau-Parameters $a^2$ beaufschlagt wird. Ein vierter Operand 17d wird dadurch erhalten, daß der Inhalt des Modulregisters 22 zunächst um $s_N^1 + s_Z^2$ Stellen verschoben wird und ferner mit dem Vorzeichen des Reduktions-Vorausschau-Parameters $b^1$ beaufschlagt wird. Der letzte Operand 17e für den Fall f = 2 wird dadurch erhalten, daß der Inhalt des Modulregisters 22 um $s_N^2$ Stellen verschoben wird und ferner mit dem Vorzeichen von $b^2$ beaufschlagt wird. Die fünf Operanden 17a bis 17e werden dann in dem Fünf-Operanden-Addierer 18 aufaddiert, um das aktualisierte Zwischenergebnis Z' für einen Iterationsschritt des erfindungsgemäßen Verfahrens zu erhalten.

Über einen Z-Datenpfad 23 wird das aktualisierte Zwischenergebnis in das Z-Register 20 eingespeist, damit das Z-Register 20 für den nächsten Iterationsschritt bereit ist. Während der Multiplikand C in allen Iterationsschritten der gleiche ist, wird der um $s_N^2$ Stellen verschobene Modul N' über einen Moduldatenpfad 24 wieder in das Modulregister 22 zurückgeführt, damit auch das Modulregister 22 für den nächsten Iterationsschritt vorbereitet ist.

Es sei darauf hingewiesen, daß die Verschiebungswerte $s_Z^i$, $s_N^i$ sowie die Parameter $a^i$ und $b^i$ im voraus berechnet werden müssen, wie es durch die Einrichtungen 10 und 13 von Fig. 1 angedeutet ist. Dasselbe gilt, wenn statt f = 2 f = 3 gewählt wird. In diesem Fall würde die Bestimmungsgleichung für das aktualisierte Zwischenergebnis Z' folgendermaßen lauten:

$$Z' = 2^{\wedge}s_Z^3 \; [2^{\wedge}s_Z^2 \; (2^{\wedge}s_Z^1 \; Z \; + \; a^1 \; C \; + \; b^1 \; 2^{\wedge}s_N^1 \; N)$$
$$+ \; a^2 \; C \; + \; b^2 \; 2^{\wedge}s_N^2 \; N] \; + \; a^3 \; C \; + \; b^3 \; 2^{\wedge}s_N^3 \; N.$$

Ein Ausmultiplizieren und Zusammenfassen der obigen Gleichung ergibt dann die Verschiebungs- bzw. Vorzeichenwerte für einen Sieben-Operanden-Addierer, um gewissermaßen drei Einzelschritte des bekannten ZDN-Verfahrens in einen einzigen Iterationsschritt des erfindungsgemäßen ZDN-Verfahrens zusammenzufassen.

Aus den bezüglich f = 2 und f = 3 gegebenen Beispielen für die Berechnung der Verschiebungswerte und der Vorzeichenwerte ist es für Fachleute ohne weiteres möglich, auch für f = 4 und darüberliegende Zahlen den Aufbau der Einrichtung 16 zum Beaufschlagen von Fig. 1 zu ermitteln.

Es sei darauf hingewiesen, daß mit zunehmendem f der Hardware-Aufwand steigt, jedoch gleichzeitig die Anzahl der zu berechnenden Zyklen gemäß L(M)/(f 3) abfällt. Es wurde herausgefunden, daß ein Optimum zwischen Hardware-Aufwand auf der einen Seite und Zeitersparnis auf der anderen Seite bei einem Wert von f = 3 liegt, d. h. bei einer Schaltung mit einem Sieben-Operanden-Addierer.

Im nachfolgenden wird auf die Berechnung der f Multiplikations-Verschiebungs-Werte (Einrichtung 10 von Fig. 1) bzw. auf der Berechnung von f Reduktions-Verschiebungs-Werte (Einrichtung 13 von Fig. 1) eingegangen. Während die Berechnung der Multiplikations-Verschiebungs-Werte $s_Z^1$, ..., $s_Z^f$ und der mit denselben korrespondierenden Multiplikations-Verschiebungs-Werte $a^1$, ..., $a^f$ durch den verwendeten Multiplikations-Lookahead-Algorithmus bestimmt ist, existieren verschiedene Möglichkeiten, um die Berechnung der f Reduktions-Verschiebungs-Werte $s_N^1$, ..., $s_N^f$ sowie der damit einhergehenden Reduktions-Vorausschau-Parameter $b^1$, ..., $b^f$ effizienter zu gestalten. Während diese Parameter ohne weiteres berechnet werden können, indem die runde Klammer der Bestimmungsgleichung für das aktualisierte Zwischenergebnis Z' im Falle von f = 2 vollständig ausgerechnet wird, ist diese Berechnung dennoch redundant, da ja nicht sämtliche Bits der Summe in der runden Klammer benötigt werden, um den Reduktions-Verschiebungs-Wert $s_N^2$ zu berechnen, sondern da lediglich einige höchstwertige Bits dieser Summe benötigt werden.

Um die Berechnung der Klammer bzw. der höchstwertigen Bits der Klammer zu vereinfachen, kann zunächst der Multiplikand C in der Klammer für die Berechnung von $s_N^2$ vernachlässigt werden. Entscheidend für das höchstwertige Bit der Klammer ist daher nicht der Multiplikand C, welcher während der gesamten Rechnung statisch ist und nicht nach oben bzw. nach unten verschoben wird. Zur Berechnung von $s_N^2$ wird daher aus der Drei-Operanden-Summe in der Klammer bereits eine Zwei-Operanden-Summe.

Zur Berechnung der Reduktions-Verschiebungs-Werte $s_N^1$, ..., $s_N^f$ empfiehlt es sich ferner, einen Hilfs-Reduktions-Verschiebungswert $s_i$ einzuführen. Anhand der nachfolgenden Fig. 3a bis 3c wird auf die Berechnung des Hilfs-Verschiebungs-Werts $s_i$ eingegangen, um die Berechnung des Reduktions-Verschiebungswerts $s_N$ unter Verwendung des Hilfs-Reduktions-Verschiebungswerts $s_i$ darzustellen. In Fig. 3a sind ein Zwischenergebnis Z und ein Modul N dargestellt. Lediglich beispielhaft hat das Zwischenergebnis vier Bits, während der Modul 9 Bits hat. Nunmehr sei angenommen, daß in dem Block 920 von Fig. 8 ein verschobenes Zwischenergebnis Z berechnet wird, was durch Multiplizieren mit $2^{\wedge}s_Z$ erreicht werden kann.

So sei angenommen, daß im Multiplikator 8 Nullen waren, was dazu führt, daß der Multiplikations-Verschiebungswert $s_Z$ gleich 8 war. Um eine modulare Reduktion zu erreichen, muß der Modul N in die Größenordnung des verschobenen Zwischenergebnis Z' kommen. Erfindungsgemäß soll der Modul N so weit verschoben werden, daß das oberste Bit des verschobenen Zwischenergebnisses Z' und das oberste Bit des verschobenen Moduls N gleich sind. Wie es aus Fig. 3b zu sehen ist, ist hierzu ein Reduktions-Verschiebungswert von $s_N$ gleich 3 erforderlich.

Aus Fig. 3b ist ebenfalls zu sehen, daß die Ermittlung von $s_N$ eigentlich erst durchgeführt werden kann, wenn $s_Z$ berechnet worden ist, d. h. daß eine parallele Ausführung der Blöcke 910 und 930 von Fig. 8, wie es für die vorliegende Erfindung bevorzugt wird, nicht möglich ist. Aus diesem Grund wird der Hilfs-Verschiebungs-Parameter $s_i$ eingeführt.

Vorteilhaft an $s_i$ ist, daß dieser Wert berechnet werden kann, ohne das $s_z$ des aktuellen Schritts zu kennen.

Aus Fig. 3c ist zu sehen, daß $s_z$ immer gleich der Summe aus $s_i$ und $s_N$ ist. $s_N$ hängt somit immer mit $s_z$ und $s_i$ derart zusammen, daß folgende Gleichung gilt:

$$s_N = s_z - s_i.$$

Das zeitaufwendige iterative Verfahren zum Bestimmen von $s_N$ kann somit zerlegt werden in ein zeitaufwendiges iteratives Verfahren zum Bestimmen von $s_i$ (Block 930, 940) und eine schnelle Differenz-Operation ($s_N = s_z - s_i$). Damit ist eine nahezu parallele Ausführung der beiden Vorausschau-Verfahren möglich, wobei die einzige serielle Komponente darin besteht, daß vor dem Berechnen von $s_N$ der tatsächliche Wert von $s_z$ durch den Multiplikations-Vorausschau-Algorithmus bereits berechnet und geliefert worden ist.

Wie es bereits ausgeführt worden ist, kann die Berechnung der Klammer bzw. die Berechnung von $s_N^2$ weiter vereinfacht werden, indem eine Modultransformation eingeführt wird. Mittels der Modultransformation wird, wie es nachfolgend ausgeführt wird, der zeitaufwendige ZDN-Vergleich zur Berechnung des Hilfs-Verschiebungs-Werts $s_i$ stark vereinfacht, wobei die Bestimmungsgleichung für $s_i$ folgendermaßen lautet:

$$2/3 \ 2^{(-s_i)} \ N < |Z| \leq 4/3 \ 2^{(-s_i)} \ N$$

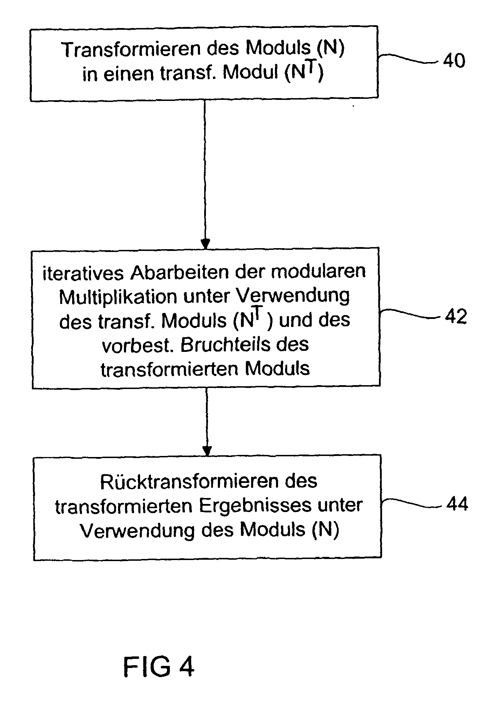

Fig. 4 zeigt ein Ablaufdiagramm des erfindungsgemäßen Verfahrens zum modularen Multiplizieren eines Multiplikanden C mit einem Multiplikator M unter Verwendung eines Moduls N. Zunächst wird in einem Schritt 40 der Modul N in einen transformierten Modul $N^T$ gemäß folgender Gleichung transformiert:

$$N^T = T \ x \ N.$$

In einem Schritt 42 wird dann die modulare Multiplikation unter Verwendung des transformierten Moduls $N^T$ und des vorbestimmten Bruchteils des transformierten Moduls, der beim bevorzugten Ausführungsbeispiel 2/3 beträgt, abgearbeitet. Bezogen auf die modulare Exponentiation bedeutet dies, daß eine RSA-Gleichung folgender Form berechnet wird:

$$C^T := M^d \ mod \ N^T.$$

Es wird also das Ergebnis der modularen Exponentiation C nicht in der durch den Modul N definierten Restklasse sondern in der durch den transformierten Modul $N^T$ definierten Restklasse berechnet, weshalb auf der linken Seite der obigen Gleichung nicht C sondern $C^T$ steht. Das erfindungsgemäße Konzept zeichnet sich dadurch aus, daß durch die Verwendung des transformierten Moduls $N^T$ die Berechnung des Hilfs-Reduktions-Verschiebungswerts $s_i$, die der Iterationsschleife von Fig. 9 des bekannten Reduktions-Vorausschau-Verfahrens entspricht, stark vereinfacht ist.

In einem abschließenden Schritt 44 wird dann wieder eine Rück-Transformation von $N^T$ zu N durchgeführt, indem eine Operation ausgeführt wird, die folgender Gleichung entspricht:

$$C := C^T \ mod \ N.$$

Das transformierte Ergebnis $C^T$, das in der Restklasse des transformierten Moduls $N^T$ liegt, wird dabei vorzugsweise durch eine einfache Verschiebungs/Subtraktions-Reduktion in die Restklasse des Moduls N zurückgeführt, so daß C das Ergebnis der modularen Exponentiation ist.

Die Transformation des Moduls N in einen transformierten Modul $N^T$ unter Verwendung des Transformators T aus Schritt 10 wird so durchgeführt, daß der vorbestimmte Bruchteil des transformierten Moduls, also beim bevorzugten Ausführungsbeispiel das 2/3-fache des transformierten Moduls, eine höherwertige Stelle mit einem ersten vorbestimmten Wert hat, der zumindest eine niederwertige Stelle folgt, die einen zweiten vorbestimmten Wert hat. Damit kann der Vergleich des Zwischenergebnisses Z mit dem 2/3-fachen des transformierten Moduls stark vereinfacht werden, nämlich indem die oberste Stelle von Z, die ebenfalls den ersten vorbestimmten Wert hat, gesucht wird, und die Differenz zwischen der höherwertigen Stelle mit ersten vorbestimmten Wert des vorbestimmten Bruchteils des transformierten Moduls und der obersten Stelle des Zwischenergebnisses Z mit dem ersten vorbestimmten Wert gleich der Differenz $s_i$ ist.

Zusammengefaßt stellt sich dies folgendermaßen dar. N wird vorzugsweise in der 32-Bit-CPU und nicht im KryptoCoprozessor in einen transformierten Modul $N^T$ transformiert, so daß gilt:

$$N^T: = T \times N,$$

wobei T eine natürliche Zahl ist.

Für $N^T$ ergibt sich folgende Gestalt, wenn sämtliche verwendeten Zahlen Binärzahlen sind:

$$N^T = 1100\ldots 0 \ XX\ldots XX$$

Für das 2/3-fache des transformierten Moduls ergibt sich dann folgender Wert:

$$2/3 \ N^T = 100\ldots 0 \ X'X'\ldots X'X'$$

Aus $N^T$ und $2/3 \ N^T$ ist zu sehen, daß beide eine erste Portion von beispielsweise 16 Bits haben, und dann eine Portion von L(N) Bits X bzw. X'. Für den sogenannten ZDN-Vergleich werden nur die obersten 16 Bits des 2/3-fachen des transformierten Moduls $N^T$ herangezogen, da sich dann bereits eine Fehlerwahrscheinlichkeit von besser als etwa $2^{-10}$ ergibt. Es müssen also nicht alle 512, 1024 oder 2048 Bits des 2/3-fachen des transformierten Moduls zum ZDN-Vergleich herangezogen werden, sondern es genügt, wenn dieser Vergleich mit den obersten 16 Bits des transformierten Moduls durchgeführt wird. Selbstverständlich könnten auch noch weniger Bits von $2/3 \ N^T$ zum Vergleich herangezogen werden, dann steigt jedoch die Fehlerwahrscheinlichkeit nach und nach an. Da die Fehler jedoch unkritisch sind und nur zu einem suboptimalen Verhalten des Reduktions-Vorausschau-Verfahrens führen, ist dieser Weg ohne weiteres gangbar.

Das 2/3-fache des transformierten Moduls $N^T$ hat somit eine höherwertige Stelle mit dem Wert 1, der zumindest eine niederwertige Stelle folgt, die einen Wert 0 hat, also einen zweiten vorbestimmten Wert. Bei dem vorstehend beschriebenen Ausführungsbeispiel ist die Anzahl der niederwertigen Stellen 15. Selbstverständlich können auch hier größere oder kleinere Blöcke genommen werden, je nach dem, welche Größenunterschiede zwischen dem Zwischenergebnis Z und dem 2/3-fachen des transformierten Moduls $N^T$ zu erwarten sind bzw. bearbeitet werden sollen. Für den Betrag des Zwischenergebnisses Z der modularen Multiplikation, also des Ergebnisses der Drei-Operanden-Addition im Block 950 von Fig. 8 ergibt sich folgende Gestalt:

$$|Z| = 00\ldots 01YY\ldots Y$$

Der Hilfs-Verschiebungswert $s_i$ wird gemäß folgender Gleichung berechnet:

$$2/3 \ N^T \ x \ 2^{-si} < |Z| \leq 4/3 \ N^T \ x \ 2^{-si}.$$

Aufgrund der Topologie des 2/3-fachen des transformierten Moduls $N^T$ ist der Wert $s_i$ immer der Abstand zwischen dem höchstwertigen Bit mit einer 1 des 2/3-fachen des transformierten Moduls $N^T$ und der höchstwertigen 1 des Betrags des Zwischenergebnisses.

Erfindungsgemäß kann diese Stellendifferenz bzw. der Wert $s_i$ trivial ermittelt werden. Keine Iteration ist mehr erforderlich.

Darüber hinaus ist kein ZDN-Register mehr erforderlich, um das 2/3-fache des Moduls zu speichern, da per Definition zumindest die oberen beispielsweise 16 Bit des 2/3-fachen des transformierten Moduls $N^T$ immer die gleiche Gestalt haben. Kein Bit-Komparator ist mehr erforderlich.

Aufgrund der Tatsache, daß kein ZDN-Register und kein ZDN-Komparator erforderlich sind, ist das gesamte Rechenwerk auf einer kleineren Chipfläche unterzubringen.

Außerdem hat der Krypto-Control-Part, also die Steuerlogik für den ZDN-Vergleich, eine kleinere Komplexität, da die aufwendige Iterationsschleife von Fig. 9 nicht ausgeführt werden muß. Schließlich geht die Berechnung schneller, so daß sich durch die Berechnung des Hilfs-Verschiebungswerts $s_i$ keine Timing-Probleme mehr für den gesamten Algorithmus ergeben.

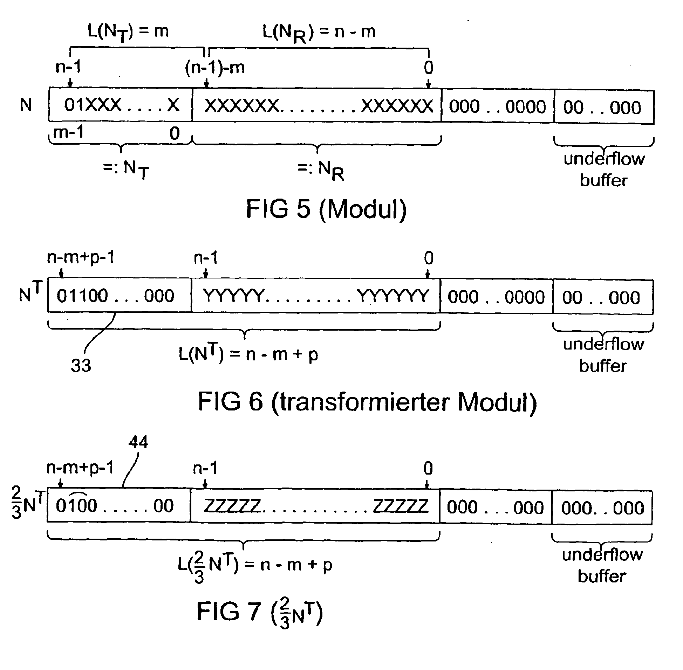

Im nachfolgenden wird anhand der Figuren 5 bis 7 auf die erfindungsgemäße Transformation genauer eingegangen.

Wie es bereits ausgeführt worden ist, besteht ein wesentlicher Teil des ZDN-Algorithmus darin, dass folgende Gleichung erfüllt ist

$$2/3 \ 2^{-si} \ N < |Z| \leq 4/3 \ 2^{-si} \ N.$$

$s_i$ wird als Hilfs-Verschiebungswert bezeichnet und ist der Verschiebungswert, der notwendig ist, um Z stellenmäßig zu derselben Position wie N zu schieben. Im Stand der Technik waren zur Berechnung von $s_i$ Vergleichsoperationen von |Z| mit 2/3 N notwendig.

Erfindungsgemäß wird der Vergleich mit 2/3 vereinfacht, indem der Modul in den transformierten Modul $N^T$ transformiert wird, wobei der transformierte Modul $N^T$ größer als N ist, bevor irgendeine modulare Operation mit N ausgeführt wird. Dann werden alle Berechnungen Modulo $N^T$ durchgeführt. Nachdem das Ergebnis der Berechnung jedoch in der Restklasse N sein muß, wird erfindungsgemäß eine abschließende Reduktion mit N durchgeführt.

Wie es in Fig. 5 gezeigt ist, sei N eine Ganzzahl mit einer Länge von N Bits. Da der Modul N immer eine positive Ganzzahl ist, d. h. MSB = 0 in der Zweier-Komplement-Darstellung, ist das Vorzeichenbit gleich 0 und das zweithöchstwertige Bit (MSB -1) des Moduls N ist immer gleich 1. Für den ZDN-Vergleich ist es nicht erforderlich, sämtliche Bits des Moduls mit sämtlichen Bits des Zwischenergebnisses zu vergleichen, sondern es ist ausreichend, eine Anzahl von m Bits für den ZDN-Vergleich zu verwenden. Die höchstwertigen m Bits des Moduls N definieren einen ersten Teil des Moduls $N_T$, während die restlichen N-m Bits des Moduls einen zweiten Teil $N_R$ des Moduls definieren. Bei einem bevorzugten Ausführungsbeispiel ist m gleich 16. Selbstverständlich sind auch größere oder kleinere Werte von m möglich.

Wie es in Fig. 6 gezeigt ist, wird die Transformation derart ausgeführt, daß der transformierte Modul $N^T$ 16 Bit länger ist als der ursprüngliche Modul von Fig. 2.

Für den ZDN-Vergleich ist es ausreichend, die ersten 16 Bit von $N^T$ zu verwenden, wobei bei einem bevorzugten Ausführungsbeispiel der vorliegenden Erfindung nur 12 Bits zum Vergleich verwendet werden, während die niederstwertigen 4 Bits einen Puffer für mögliche Überträge darstellen, die von noch niederwertigeren Bits kommen können.

In diesem Fall ist die Wahrscheinlichkeit, daß der Vergleich ein falsches Ergebnis ergibt, kleiner als $2^{-12}$. Falls der Vergleich ein falsches Ergebnis liefert, wird nur ein suboptimaler Reduktions-Verschiebungswert $s_N$ erzeugt, das Ergebnis Modulo N ist jedoch nach wie vor korrekt.

Wenn der Modul wie in Fig. 5 in der Zweierkomplementdarstellung verwendet wird, dann kann der Modul N folgendermaßen zerlegt werden:

$$N \; = \; 2^{n-m} \; N_T \; + \; N_R.$$

Nun wird N zu $N^T$ unter Verwendung des Transformators T transformiert, wobei T eine geeignet gewählte Ganzzahl ist, was aus Kongruenzgründen der Fall sein muß. $N^T$ sollte die in Fig. 6 gezeigte Form haben, d. h. das höchstwertige Bit (MSB) von $N^T$ muß gleich 0 sein, da $N^T$ eine positive Ganzzahl sein soll. Wie es nachfolgend ausgeführt wird, müssen das zweithöchstwertige und das dritthöchstwertige Bit des transformierten Moduls gleich 1 sein, während sämtliche anderen Bits des obersten Abschnitts des transformierten Moduls $N^T$, welcher in Fig. 6 mit dem Bezugszeichen 33 bezeichnet ist, einen Wert von "0" haben sollten. Nur in diesem Fall ergibt sich nämlich für das 2/3-fache von $N^T$, daß der oberste Abschnitt des 2/3-fachen von $N^T$, wie es in Fig. 7 gezeigt ist, lediglich ein Bit mit einer "1" hat, während alle anderen Bits in diesem obersten Abschnitt 44 gleich "0" sind, so daß der bereits beschriebene triviale Vergleich zur Bestimmung von $s_i$ ausgeführt werden kann.

Zunächst wird jedoch anhand von Fig. 6 auf die Berechnung des transformierten Moduls $N^T$ unter Verwendung des Transformators T eingegangen. Es gelte folgende Definition:

$$N^T \; = \; T \; N$$

$$= \; T(2^{n-m} \; N_T \; + \; N_R)$$

Für den Transformator T gilt folgendes:

$$T \; = \; \left| \frac{2^{p-2} \; + \; 2^{p-3}}{N_T} \right|$$

Damit ergibt sich für den transformierten Modul $N^T$ folgendes:

$$N^T \; = \; \left| \frac{2^{p-2} \; + \; 2^{p-3}}{N_T} \right| \; (2^{n-m} N_T \; + \; N_R)$$

$$N^T \; = \; (2^{n+p-m-2} \; + \; 2^{n+p-m-3}) \frac{N_T}{N_T} \; + \; (2^{p-2}+2^{p-3}) \frac{N_R}{N_T}.$$

Wenn beispielsweise typische Werte für p und m genommen werden, also p gleich 32 Bit und m gleich 16 Bit, so ergibt sich für $N^T$ folgendes:

$$N^T = 2^{n+14} + 2^{n+13} + N_R \frac{2^{p-2}+2^{p-3}}{N_T}.$$

Es sei darauf hingewiesen, daß die Berechnung von $N^T$ vorzugsweise in der Host-CPU durchgeführt wird, und nicht im KryptoCoprozessor. Die Host-CPU umfaßt ein Kurzzahl-Rechenwerk, was jedoch für die Berechnung von $N^T$ ausreichend ist. Da T eine Ganzzahl sein muß und die Berechnungen innerhalb des Krypto-Coprozessors Modulo $N^T$ anstatt Modulo N durchgeführt werden, wobei $N^T$ größer als N ist, sind nur die ersten p-m gleich 16 Bits von $N^T$ für den trivialen ZDN-Vergleich, um den Hilfs-Verschiebungswert $s_i$ zu berechnen, relevant. Die anderen n Bits von $N^T$ können irgendeine Zahl sein, sie sind für die Berechnung des Hilfs-Verschiebungswerts $s_i$, also für den Vergleich mit Z nicht relevant. Selbstverständlich werden jedoch alle Bits des transformierten Moduls $N^T$ für die Drei-Operanden-Addition benötigt, die nunmehr statt unter Verwendung des verschobenen Moduls unter Verwendung des verschobenen transformierten Moduls ausgeführt wird.

Für die gewählten Werte für m und p ist der Transformator T eine 16-Bit-Ganzzahl. Daher muß die Division, die zur Berechnung von T erforderlich ist, bzw. die zur Berechnung von $N^T$ erforderlich ist, nur für die höchstwertigen 32 Bits durchgeführt werden, und kann daher schnell und einfach auf der Host-CPU programmiert werden.

In Fig. 7 ist das 2/3-fache des transformierten Moduls $N^T$ gezeigt. Da das MSB-1 und das MSB-2 von $N^T$ gleich "1" sind, wie es in Fig. 6 gezeigt ist, und folgendes gilt:

$$(11)_2 = (3)_{10} \text{ und } (2/3 \times 3)_2 = (2)_{10} = (10)_2,$$

ergibt sich ein einfaches Bitmuster für das 2/3-fache des transformierten Moduls $N^T$, wobei die Länge des 2/3-fachen des transformierten Moduls $N^T$ gleich n-m+p ist.

Aufgrund der speziellen Gestalt von 2/3 $N^T$ wird nun der Vergleich mit |Z| sehr einfach. Es ist bekannt, daß die höchstwertige Eins von 2/3 $N^T$ an einer Position n+p-m-2 an dem Beginn einer modularen Operation ist. Ein Zeiger für das Register Z startet dann bei einem bevorzugten Ausführungsbeispiel an dem MSB von Z und sucht nach der ersten "1" von Z. Wenn das MSB von Z gleich 1 ist, dann ist Z eine negative Zahl, und man sucht statt dessen die erste Null von Z.

Die Differenz der Bitposition der ersten Eins im Register N und im Register Z bestimmt den Hilfs-Verschiebungswert $s_i$.

Da das Ergebnis der Modulo-Operation in der Restklasse N sein muß, wird erfindungsgemäß eine Endreduktion Modulo N durchgeführt, es muß also eine Rücktransformation (Schritt 44 in Fig. 4) durchgeführt werden.

Die Transformation von N zu $N^T$ hat die folgenden Vorteile im Vergleich zum bekannten ZDN-Vergleich:

Statt der Berechnung von 2/3 N innerhalb des Kryptocoprozessors kann eine einfache Transformation von N in $N^T$ in der Host-CPU durchgeführt werden.

Auf dem Chip werden kein ZDN-Register und keine Komparatorlogik benötigt, weshalb die Chipgröße kleiner und die Komplexität des Coprozessors geringer werden.

Die Verwendung der Modultransformation ermöglicht auf einfache Art und Weise die Berechnung des Hilfs-Verschiebungs-Werts $s_i$, ohne den gesamten Inhalt der Klammer bzw. der Klammern in den Bestimmungsgleichungen für das aktualisierte Zwischenergebnis Z' berechnen zu müssen.

Die einzelnen Schritte zur Durchführen des erfindungsgemäßen Verfahrens gemäß einem bevorzugten Ausführungsbeispiel der vorliegenden Erfindung am Beispiel f = 2 lauten somit folgendermaßen:

1. Durchführen einer Modultransformation.

2. Berechnen der Multiplikations-Verschiebungs-Werte $s_z{}^1$ und $s_z{}^2$ sowie der Multiplikations-Vorausschau-Parameter $a^1$ und $a^2$.

3. Berechnen des Hilfs-Verschiebungs-Werts $s_i{}^1$ und Berechnen des ersten Reduktions-Verschiebungs-Werts $s_N{}^1 = s_z{}^1 - s_i{}^1$ und Ermitteln des ersten Reduktions-Vorausschau-Parameters $b^1$.

4. Berechnen des Inhalts eines Hilfszwischenergebnisses, das der besagten Klammer ohne Berücksichtigung des Multiplikanden entspricht, um daraus und unter Verwendung des um $s_N^1$ verschobenen Modulregisterinhalts den zweiten Hilfs-Verschiebungs-Wert $s_i^2$ zu berechnen, aus dem dann wiederum ohne weiteres der Reduktions-Verschiebungs-Parameter $s_N^2$ berechnet werden kann.

5. Durchführen der Fünf-Operanden-Addition mit den durch die Verschiebungswerte und Verschiebungsparameter beaufschlagten Werten für C, N bzw. $N^T$ und Z.

6. Iterieren der vorgenannten Schritte, bis sämtliche Stellen des Multiplikators abgearbeitet sind.

7. Durchführen einer Modulrücktransformation

Schließlich sei darauf hingewiesen, dass das erfindungsgemäße Konzept des Multioperanden-Addierers zur Berechnung mehrerer herkömmlicher ZDN-Schritte auf einmal auch für Ringe der Form $f_2[x/N(x)]$ (wobei $N(x)$ ein Polynom vom Grad d ist) eingesetzt werden kann, wobei dann sämtliche Größen als Polynome einer Variablen x aufzufassen sind, und die Koeffizienten der einzelnen Potenzen von x in den entsprechenden Registern abzuspeichern sind.

Bezugszeichenliste

| 10 | Einrichtung zum Ermitteln von Multiplikations-Verschiebungs-Werten |
| 11 | Multiplikatoreingang |
| 12 | Multiplikations-Verschiebungs-Werte-Ausgang |
| 13 | Einrichtung zum Ermitteln der Reduktions-Verschiebungs-Werte |
| 14 | Moduleingang |
| 15 | Reduktions-Verschiebungs-Wert-Ausgang |
| 16 | Einrichtung zum Beaufschlagen |
| 17a | 2f+1 Operanden, 1. Operand |
| 17b | 2f+1 Operanden, 2. Operand |
| 17c | 2f+1 Operanden, 3. Operand |
| 17d | 2f+1 Operanden, 4. Operand |
| 17e | 2f+1 Operanden, 5. Operand |
| 18 | Einrichtung zum Zusammenfassen |
| 19 | Ausgang für das aktualisierte Zwischenergebnis |
| 20 | Z-Register |
| 21 | C-Register |
| 22 | N-Register |
| 23 | Datenpfad für das Z-Register |
| 24 | Datenpfad für das N-Register |
| 40 | Einrichtung zum Transformieren des Moduls |
| 42 | Einrichtung zum iterativen Abarbeiten der modularen Multiplikation |
| 44 | Einrichtung zum Rücktransformieren des transformierten Ergebnisses |
| 900 | Start des ZDN-Verfahrens |
| 910 | Multiplikations-Vorausschau-Verfahren für den ZDN-Algorithmus |
| 920 | Verschieben von Z nach links oder rechts |
| 930 | Reduktions-Vorausschau-Verfahren für den ZDN-Algorithmus |
| 940 | Verschieben des Moduls nach links |
| 950 | Drei-Operanden-Addition für den ZDN-Algorithmus |
| 960 | Ende des ZDN-Algorithmus |
| 1000 | Globale Variablen |
| 1010 | Initialisierung des Reduktions-Verschiebungswerts |
| 1020 | Berechnen von ZDN |
| 1030 | Untersuchen von n und $s_N$ |
| 1040 | Dekrementieren von n |
| 1060 | Dekrementieren des Reduktions-Verschiebungswerts |
| 1080 | Berechnen von ZDN/2 |
| 1100 | Vergleich des Zwischenergebnisses mit ZDN |

1120 Bestimmen des Reduktions-Vorausschau-Parameters
1140 Bestimmen des Reduktions-Vorausschau-Parameters
1160 Berechnen von n
1180 Berechnen des Reduktions-Vorausschau-Parameters
1200 Untersuchen von n
1220 Berechnen von cur_k
1240 Berechnen von cur_k

**Patentansprüche**

1. Verfahren zum Durchführen einer modularen Multiplikation auf einer Datenverarbeitungseinrichtung zwischen einem Multiplikanden (C) und einem Multiplikator (M), der aus einer Mehrzahl von Stellen besteht, unter Verwendung eines Moduls (N), wobei die modulare Multiplikation Teil einer modularen Exponentiation im Rahmen einer kryptographischen Anwendung ist, und wobei der Multiplikand (C), der Multiplikator (M) und der Modul (N) Variablen der kryptographischen Anwendung sind, mit folgenden Schritten:

   Ermitteln (10) von f Multiplikations-Verschiebungs-Werten $(s_Z^1, ..., s_Z^f)$ und f Multiplikations-Vorausschau-Parametern $(a^1, ..., a^f)$, wobei die Multiplikations-Vorausschau-Parameter einen Wert von +1, -1 oder Null haben können, mittels eines Multiplikations-Vorausschau-Verfahrens unter Berücksichtigung von f Blöcken von Stellen des Multiplikators (M), die aneinander angrenzen, wobei f größer oder gleich 2 ist;
   Ermitteln (13) von f Reduktions-Verschiebungs-Werten $(s_N^1, ..., s_N^f)$ und f Reduktions-Vorausschau-Parametern $(b^1, ..., b^f)$, wobei die Reduktions-Vorausschau-Parameter einen Wert von +1, -1 oder Null haben können, mittels eines Reduktions-Vorausschau-Verfahrens für die f Blöcke von Stellen des Multiplikators (M);
   Bearbeiten (16) eines Zwischenergebnisses (Z) aus einem vorherigen Iterationsschritt, des Moduls (N) oder eines von dem Modul (N) abgeleiteten Werts und des Multiplikanden (C) unter Verwendung der f Multiplikations-Verschiebungs-Werte, der f Multiplikations-Vorausschau-Parameter $(a^1, ., a^f)$, der f Reduktions-Verschiebungs-Werte und der f Reduktions-Vorausschau-Parameter $(b^1, ..., b^f)$, um 2f+1 Operanden (17a bis 17e) zu erhalten; und
   Aufaddieren (18) der (2f+1)-Operanden, um ein aktualisiertes Zwischenergebnis (Z') für einen auf den vorherigen Iterationsschritt folgenden Iterationsschritt zu erhalten, wobei eine Iteration so lange fortgesetzt wird, bis sämtliche Stellen des Multiplikators (M) abgearbeitet sind, wobei das aktualisierte Zwischenergebnis nach Abarbeitung sämtlicher Stellen des Multiplikators (M) ein Ergebnis der modularen Multiplikation im Rahmen der kryptographischen Anwendung ist.

2. Verfahren gemäß Anspruch 1, bei dem im Schritt des Ermittelns (13) der f Reduktions-Verschiebungs-Werte folgende Teilschritte durchgeführt werden:

   Berechnen eines Hilfs-Verschiebungs-Werts $(s_i)$ aus einem Zwischenergebnis (Z) und einem Modulwert (N) für einen vorhergehenden Iterationsschritt;
   Bilden einer Differenz aus dem Multiplikations-Verschiebungs-Wert für eine erste Anzahl von Stellen des Multiplikators (M) und dem Hilfs-Verschiebungs-Wert $(s_i)$, um einen Reduktions-Verschiebungs-Wert $(s_N)$ zu erhalten.

3. Verfahren gemäß Anspruch 2, bei dem der Schritt des Ermittelns (13) von f Reduktions-Verschiebungs-Werten ferner folgende Teilschritte aufweist:

   Berechnen eines Hilfszwischenergebnisses unter Verwendung des Zwischenergebnisses (Z) für den vorausgehenden Iterationsschritt, des ersten Multiplikations-Verschiebungs-Werts $(s_Z^1)$, des Moduls (N) und des Reduktions-Verschiebungs-Werts $(s_N)$, jedoch ohne Berücksichtigung des Multiplikanden (C);
   Berechnen eines Hilfsmoduls durch Verschieben des Moduls oder des von dem Modul abgeleiteten Werts um eine Anzahl von Stellen gleich dem Reduktions-Verschiebungs-Wert $(s_N)$;
   Berechnen eines weiteren Hilfs-Verschiebungs-Werts $(s_i^2)$ aus dem Hilfszwischenergebnis und dem Hilfsmodul; und
   Bilden einer Differenz aus dem zweiten Multiplikations-Verschiebungs-Wert $(s_Z^2)$ und dem zweiten Hilfs-Verschiebungs-Wert $(s_i^2)$, um den zweiten Reduktions-Verschiebungs-Wert $(s_N^2)$ zu erhalten.

4. Verfahren gemäß einem der vorhergehenden Ansprüche,

bei dem vor dem Schritt des Ermittelns (10) von f Multiplikations-Verschiebungs-Werten und vor dem Schritt des Ermittelns (13) von f Reduktions-Verschiebungs-Werten ferner folgender Schritt durchgeführt wird:

Transformieren (40) des Moduls (N) in einen transformierten Modul ($N^T$), der größer als der Modul (N) ist, wobei ein vorbestimmter Bruchteil (2/3) des transformierten Moduls eine höherwertige Stelle mit einem ersten vorbestimmten Wert hat, der zumindest eine niederwertige Stelle folgt, die einen zweiten vorbestimmten Wert hat; und bei dem nach einer Abarbeitung sämtlicher Stellen des Multiplikators ferner folgender Schritt durchgeführt wird:

Rücktransformieren (44) des aktualisierten Zwischenergebnisses (Z') durch modulares Reduzieren des aktualisierten Zwischenergebnisses unter Verwendung des Moduls (N),

wobei die Schritte des Ermittelns (10, 13), des Bearbeitens (16) und des Aufaddierens (18) auf der Basis des transformierten Moduls ($N^T$) durchgeführt werden.

5. Verfahren gemäß Anspruch 4, bei dem im Schritt des Ermittelns von f Reduktions-Verschiebungs-Werten (13) in einem Teilschritt ein Multiplikationszwischenergebnis und ein Reduktions-Verschiebungs-Wert ($s_N$) ermittelt werden, wobei der Reduktions-Verschiebungs-Wert ($s_N$) unter Verwendung einer Bestimmung der Anzahl von Stellen zwischen der höherwertigen Stelle mit dem ersten vorbestimmten Wert des transformierten Moduls und der höchstwertigen Stelle des Zwischenergebnisses (Z), die den ersten vorbestimmten Wert hat, berechnet wird.

6. Verfahren gemäß Anspruch 4 oder 5, bei dem der vorbestimmte Bruchteil des transformierten Moduls 2/3 beträgt.

7. Verfahren gemäß einem der Ansprüche 4 bis 6, bei dem das höchstwertige Bit des transformierten Moduls ein VorzeichenBit ist und ein höherwertiger Abschnitt des vorbestimmten Bruchteils des Moduls folgendermaßen lautet: 01000 xx ... xx, wobei die mit xx bezeichneten Bits beliebige Werte haben können.

8. Verfahren gemäß Anspruch 7, bei dem der höherwertige Abschnitt des transformierten Moduls ($N^T$) folgendermaßen lautet:
01100 ... 00.

9. Verfahren gemäß einem der vorhergehenden Ansprüche, bei dem der Modul eine Ganzzahl ist, oder bei dem der Modul ein Polynom einer Variablen aus einem Ring der Form $f_2[x/N(x)]$ ist, wobei N(x) das Polynom der Variablen x ist.

10. Vorrichtung zum Durchführen einer modularen Multiplikation auf einer Datenverarbeitungseinrichtung zwischen einem Multiplikanden (C) und einem Multiplikator (M), der aus einer Mehrzahl von Stellen besteht, unter Verwendung eines Moduls (N), wobei die modulare Multiplikation Teil einer modularen Exponentiation im Rahmen einer kryptographischen Anwendung ist, und wobei der Multiplikand (C), der Multiplikator (M) und der Modul (N) Variablen der kryptographischen Anwendung sind, mit folgenden Merkmalen:

einer Einrichtung , die zum Ermitteln (10) von f Multiplikations-Verschiebungs-Werten ($s_z^1$, ..., $s_z^f$) und f Multiplikations-Vorausschau-Parametern ($a^1$, ..., $a^f$), wobei die Multiplikations-Vorausschau-Parameter einen Wert von +1, -1 oder Null haben können, mittels eines Multiplikations-Vorausschau-Verfahrens unter Berücksichtigung von f Blöcken von Stellen des Multiplikators (M), ausgebildet ist, die aneinander angrenzen, wobei f größer oder gleich 2 ist;
einer Einrichtung, die zum Ermitteln (13) von f Reduktions-Verschiebungs-Werten ($s_N^1$, ... , $s_N^f$) und f Reduktions-Vorausschau-Parametern ($b^1$, ..., $b^f$), wobei die Reduktions-Vorausschau-Parameter einen Wert von +1, -1 oder Null haben können, mittels eines Reduktions-Vorausschau-Verfahrens für die f Blöcke von Stellen des Multiplikators (M) ausgebildet ist;
einer Einrichtung, die zum Bearbeiten (16) eines Zwischenergebnisses (Z) aus einem vorherigen Iterationsschritt, des Moduls (N) oder eines von dem Modul (N) abgeleiteten Werts und des Multiplikanden (C) unter Verwendung der f Multiplikations-Verschiebungs-Werte, der f Multiplikations-Vorausschau-Parameter ($a^1$, ., $a^f$), der f Reduktions-Verschiebungs-Werte und der f Reduktions-Vorausschau-Parameter ($b^1$, ..., $b^f$), ausgebildet ist, um 2f+1 Operanden (17a bis 17e) zu erhalten; und
einer Einrichtung, die zum Aufaddieren (18) der (2f+1)-Operanden ausgebildet ist, um ein aktualisiertes Zwischenergebnis (Z') für einen auf den vorherigen Iterationsschritt folgenden Iterationsschritt zu erhalten, wobei eine Iteration so lange fortgesetzt wird, bis sämtliche Stellen des Multiplikators (M) abgearbeitet sind, wobei das aktualisierte Zwischenergebnis nach Abarbeitung sämtlicher Stellen des Multiplikators (M) ein Ergebnis der modularen Multiplikation im Rahmen der kryptographischen Anwendung ist.

**Claims**

1. Method for performing a modular multiplication on a data-processing means between a multiplicand (C) and a multiplier (M) consisting of a plurality of digits, using a modulus (N), the modular multiplication being part of a modular exponentiation within the framework of a cryptographic application, and the multiplicand (C), the multiplier (M) and the modulus (N) being variables of the cryptographic application, the method comprising:

   determining (10) f multiplication shift values ($s_Z^1$, ..., $s_Z^f$) and f multiplication-lookahead parameters ($a^1$, ..., $a^f$), it being possible for the multiplication-lookahead parameters to have values of +1, -1, or zero, by means of a multiplication-lookahead method while taking into account f blocks of consecutive digits of the multiplier (M), f being larger than or equaling 2;
   determining (13) f reduction shift values ($s_N^1$, ..., $s_N^f$) and f reduction-lookahead parameters ($b^1$, ..., $b^f$), it being possible for the reduction-lookahead parameters to have values of +1, -1, or zero, by means of a reduction-lookahead method for the f blocks of digits of the multiplier (M);
   processing (16) an intermediate result (Z) from a previous iteration step, the modulus (N) or a value derived from the modulus (N), and the multiplicand (C) using the f multiplication shift values, the f multiplication-lookahead parameters ($a^1$, ..., $a^f$), the f reduction shift values, and the f reduction-lookahead parameters ($b^1$, ..., $b^f$) so as to obtain 2f+1 operands (17a to 17e); and
   adding up (18) the (2f+1) operands to obtain an updated intermediate result (Z') for an iteration step following the previous iteration step, an iteration being continued for such time until all digits of the multiplier (M) have been processed, wherein the updated intermediate result is a result of the modular multiplication within the framework of the cryptographic application once all digits of the multiplier (M) have been processed.

2. Method as claimed in claim 1, wherein the step of determining (13) the f reduction shift values includes performing the following substeps:

   calculating an auxiliary shift value ($s_i$) from an intermediate result (Z) and from a modulus value (N) for a preceding iteration step;
   forming a difference from the multiplication shift value for a first number of digits of the multiplier (M), and the auxiliary shift value ($s_i$) so as to obtain a reduction shift value ($s_N$) .

3. Method as claimed in claim 2, wherein the step of determining (13) f reduction shift values further includes the following substeps:

   calculating an auxiliary intermediate result using the intermediate result (Z) for the preceding iteration step, calculating the first multiplication shift value ($s_Z^1$), the modulus (N) and the reduction shift value ($s_N$), however without taking into account the multiplicand (C);
   calculating an auxiliary modulus by shifting the modulus or the value derived from the modulus by a number of digits equaling the reduction shift value ($s_N$) ;
   calculating a further auxiliary shift value ($s_i^2$) from the auxiliary intermediate result and the auxiliary modulus; and
   forming a difference from the second multiplication shift value ($s_Z^2$) and the second auxiliary shift value ($s_i^2$) so as to obtain the second reduction shift value ($s_N^2$) .

4. Method as claimed in any one of the previous claims, wherein prior to the step of determining (10) f multiplication shift values, and prior to the step of determining (13) f reduction shift values, the following step is performed:

   transforming (40) the modulus (N) to a transformed modulus ($N^T$) larger than the modulus (N), a predetermined fraction (2/3) of the transformed modulus having a more significant digit having a first predetermined value, which digit is followed by a less significant digit having a second predetermined value;
   and wherein the following step is performed once all digits of the multiplier have been processed:

   transforming (44) the updated intermediate result (Z') back by modular reduction of the updated intermediate result using the modulus (N),
   the steps of determining (10, 13), of processing (16) and of adding up (18) being performed on the basis of the transformed modulus ($N^T$).

5. Method as claimed in claim 4, wherein the step of determining f reduction shift values (13) includes a substep of determining a multiplication intermediate result and a reduction shift value ($s_N$), the reduction shift value ($s_N$) being calculated using a determination of the number of digits between the more significant digit having the first predetermined value of the transformed modulus, and the most significant digit of the intermediate result (Z) having the first predetermined value.

6. Method as claimed in claim 4 or 5, wherein the predetermined fraction of the transformed modulus is 2/3.

7. Method as claimed in any one of claims 4 to 6, wherein the most significant bit of the transformed modulus is a sign bit, and wherein a more significant portion of the predetermined fraction of the modulus is as follows: 01000 xx ... xx, wherein the bits designated by xx may have any values.

8. Method as claimed in claim 7, wherein the more significant portion of the transformed modulus ($N^T$) is as follows: 01100 ... 00.

9. Method as claimed in any one of the previous claims, wherein the modulus is an integer, or wherein the modulus is a polynomial of a variable of a ring of the form of $f_2$ [x/N(x)], wherein N(x) is the polynomial of variable x.

10. Apparatus for performing a modular multiplication on a data-processing means between a multiplicand (C) and a multiplier (M) consisting of a plurality of digits, using a modulus (N), the modular multiplication being part of a modular exponentiation within the framework of a cryptographic application, and the multiplicand (C), the multiplier (M) and the modulus (N) being variables of the cryptographic application, the apparatus comprising:

a means configured to determine (10) f multiplication shift values ($s_z^1$, ..., $s_z^f$) and f multiplication-lookahead parameters ($a^1$, ..., $a^f$), it being possible for the multiplication-lookahead parameters to have values of +1, -1, or zero, by means of a multiplication-lookahead method while taking into account f blocks of consecutive digits of the multiplier (M), f being larger than or equaling 2;
a means configured to determine (13) f reduction shift values ($s_N^1$, ..., $s_N^f$) and f reduction-lookahead parameters ($b^1$, ..., $b^f$), it being possible for the reduction-lookahead parameters to have values of +1, - 1, or zero, by means of a reduction-lookahead method for the f blocks of digits of the multiplier (M);
a means configured to process (16) an intermediate result (Z) from a previous iteration step, the modulus (N) or a value derived from the modulus (N), and the multiplicand (C) using the f multiplication shift values, the f multiplication-lookahead parameters ($a^1$, ..., $a^f$), the f reduction shift values, and the f reduction-lookahead parameters ($b^1$, ..., $b^f$) so as to obtain 2f+1 operands (17a to 17e); and
a means configured to add up (18) the (2f+1) operands to obtain an updated intermediate result (Z') for an iteration step following the previous iteration step, an iteration being continued for such time until all digits of the multiplier (M) have been processed, wherein the updated intermediate result is a result of the modular multiplication within the framework of the cryptographic application once all digits of the multiplier (M) have been processed.

**Revendications**

1. Procédé pour effectuer une multiplication modulaire dans un dispositif de traitement de données entre un multiplicande (C) et un multiplicateur (M) qui se compose d'une pluralité d'emplacements, à l'aide d'un module (N), la multiplication modulaire faisant partie d'une élévation à une puissance modulaire dans le cadre d'une application cryptographique, et le multiplicande (C), le multiplicateur (M) et le module (N) étant des variables de l'application cryptographique, aux étapes suivantes consistant à :

déterminer (10) f valeurs de décalage de multiplication ($s_z^1$, ..., $s_z^f$) et f paramètres de prédiction de multiplication ($a^1$, ..., $a^f$), les paramètres de prédiction de multiplication pouvant avoir une valeur de + 1, -1 ou zéro, au moyen d'un procédé de prédiction de multiplication en tenant compte des f blocs d'emplacements du multiplicateur (M) qui sont adjacents l'un à l'autre, f étant supérieur ou égal à 2 ;
déterminer (13) f valeurs de décalage de réduction ($s_N^2$), ..., $s_N^f$) et f paramètres de prédiction de réduction ($b^1$, ..., $b^f$), les paramètres de prédiction de réduction pouvant avoir une valeur de + 1, -1 ou zéro, au moyen d'un procédé de prédiction de réduction pour les f blocs d'emplacements du multiplicateur (M) ;

traiter (16) un résultat intermédiaire (Z) d'une étape d'itération précédente, du module (N) ou d'une valeur dérivée du module (N) et du multiplicande (C) à l'aide des f valeurs de décalage de multiplication, des f paramètres de prédiction de multiplication ($a^1$, ..., $a^f$), des f valeurs de décalage de réduction et des f paramètres de prédiction de réduction ($b^1$, ..., $b^f$), pour obtenir 2f+ 1 opérandes (17a à 17e) ; et

additionner (18) les (2f+1) opérandes, pour obtenir un résultat intermédiaire mis à jour (Z') pour une étape d'itération suivant l'étape d'itération précédente, une itération étant continuée jusqu'à ce que soient traités tous les emplacements du multiplicateur (M), le résultat intermédiaire mis à jour après le traitement de tous les emplacements du multiplicateur (M) étant un résultat de la multiplication modulaire dans le cadre de l'application cryptographique.

2. Procédé selon la revendication 1, dans lequel sont réalisées, à l'étape de détermination (13) des f valeurs de décalage de réduction, les étapes partielles suivantes consistant à :

calculer une valeur de décalage auxiliaire ($s_i$) à partir d'un résultat intermédiaire (Z) et d'une valeur de module (N) pour une étape d'itération précédente ;

former une différence à partir de la valeur de décalage de multiplication pour un premier nombre d'emplacements du multiplicateur (M) et de la valeur de décalage auxiliaire ($s_i$), pour obtenir une valeur de décalage de réduction ($s_N$).

3. Procédé selon la revendication 2, dans lequel l'étape de détermination (13) de f valeurs de décalage de réduction présente, par ailleurs, les étapes partielles suivantes consistant à :

calculer un résultat intermédiaire auxiliaire à l'aide du résultat intermédiaire (Z) pour l'étape d'itération précédente, de la première valeur de décalage de multiplication ($s_Z^1$), du module (N) et de la valeur de décalage de réduction ($s_N$), toutefois sans tenir compte du multiplicande (C) ;

calculer un module auxiliaire en décalant le module ou la valeur dérivée du module d'un nombre d'emplacements égal à la valeur de décalage de réduction ($s_N$) ;

calculer une autre valeur de décalage auxiliaire ($s_i^2$) à partir du résultat intermédiaire auxiliaire et du module auxiliaire ; et

former une différence entre la deuxième valeur de décalage de multiplication ($s_z^2$) et la deuxième valeur de décalage auxiliaire ($s_i^2$), pour obtenir la deuxième valeur de décalage de réduction ($s_N^2$).

4. Procédé selon l'une des revendications précédentes,

dans lequel est réalisée, par ailleurs, avant l'étape de détermination (10) de f valeurs de décalage de multiplication et avant l'étape de détermination (13) de f valeurs de décalage de réduction, l'étape suivante consistant à :

transformer (40) le module (N) en un module transformé ($N^T$) qui est supérieur au module (N), une fraction prédéterminée (2/3) du module transformé ayant un emplacement d'une première valeur prédéterminée qui suit au moins un emplacement de valeur inférieure qui a une deuxième valeur prédéterminée ;

et dans lequel est réalisée, après un traitement de tous les emplacements du multiplicateur, par ailleurs, l'étape suivante consistant à :

transformer inversement (44) le résultat intermédiaire mis à jour (Z') par réduction modulaire du résultat intermédiaire mis à jour à l'aide du module (N),

les étapes de détermination (10, 13), de traitement (16) et d'addition (18) sont réalisées sur base du module transformé ($N^T$).

5. Procédé selon la revendication 4, dans lequel sont déterminés, dans l'étape de détermination de f valeurs de décalage de réduction (13), dans une étape partielle, un résultat intermédiaire de multiplication et une valeur de décalage de réduction ($s_N$), la valeur de décalage de réduction ($s_N$) étant calculée à l'aide d'une détermination du nombre d'emplacements entre l'emplacement à la valeur la plus élevée avec la première valeur prédéterminée du module transformé et l'emplacement à la valeur la plus élevée du résultat intermédiaire (Z) qui a la première valeur prédéterminée.

6. Procédé selon la revendication 4 ou 5, dans lequel la fraction prédéterminée du module transformé est de 2/3.

7. Procédé selon l'une des revendications 4 à 6, dans lequel le bit à la valeur la plus élevée du module transformé est un bit de signe et un segment à la valeur la plus élevée de la fraction prédéterminée du module est le suivant : 01000 xx ... xx, les bits désignés par xx pouvant avoir des valeurs arbitraires.

8. Procédé selon la revendication 7, dans lequel le segment à la valeur la plus élevée du module transformé ($N^T$) est le suivant : 01100... 00.

9. Procédé selon l'une des revendications précédentes, dans lequel le module est un nombre entier, ou dans lequel le module est un polynôme d'une variable d'un anneau de forme $f_2(x/N(x))$, $N(x)$ étant le polynôme des variables x.

10. Dispositif pour effectuer une multiplication modulaire dans un dispositif de traitement de données entre un multiplicande (C) et un multiplicateur (M) qui se compose d'une pluralité d'emplacements, à l'aide d'un module (N), la multiplication modulaire faisant partie d'une élévation à une puissance modulaire dans le cadre d'une application cryptographique, et le multiplicande (C), le multiplicateur (M) et le module (N) étant des variables de l'application cryptographique, aux caractéristiques suivantes :

un dispositif qui est réalisé de manière à déterminer (10) f valeurs de décalage de multiplication ($s_Z^1$, ..., $s_Z^f$) et f paramètres de prédiction de multiplication ($a^1$, ..., $a^f$), les paramètres de prédiction de multiplication pouvant avoir une valeur de +1, -1 ou zéro, au moyen d'un procédé de prédiction de multiplication en tenant compte de f blocs d'emplacements du multiplicateur (M) qui sont adjacents l'un à l'autre, f étant supérieur ou égal à2;
un dispositif qui est réalisé de manière à déterminer (13) f valeurs de décalage de réduction ($s_N^1$, ..., $s_N^f$) et f paramètres de prédiction de réduction ($b^1$, ..., $b^f$), les paramètres de décalage de réduction pouvant avoir une valeur de +1, -1 ou zéro, au moyen d'un procédé de prévision de réduction pour les f blocs d'emplacements du multiplicateur (MJ) ;
un dispositif qui est réalisé de manière à traiter (16) un résultat intermédiaire (Z) à partir d'une étape d'itération précédente, du module (N) ou d'une valeur dérivée du module (N) et du multiplicande (C) à l'aide des f valeurs de décalage de multiplication et des f paramètres de prédiction de multiplication ($a^1$, ..., $a^f$), des f valeurs de décalage de réduction et des f paramètres de prédiction de réduction ($b^1$, ..., $b^f$), pour obtenir 2f+1 opérandes (17a à 17e) ; et
un dispositif qui est réalisé de manière à additionner (18) les (2f+1) opérandes, pour obtenir un résultat intermédiaire mis à jour (Z') pour une étape d'itération suivant l'étape d'itération précédente, une itération étant continuée jusqu'à ce que soient traités tous les emplacements du multiplicateur (M), le résultat intermédiaire mis à jour après traitement de tous les emplacements du multiplicateur (M) étant un résultat de la multiplication modulaire dans le cadre de l'application cryptographique.

C   N/N$^T$  Z

11   10   12
M   $s_Z^1, ..., s_Z^f$

Ermitteln von f
Multiplikations-
verschiebungswerten

$a^1, ..., a^f$

Beaufschlagen

16

13   15
N oder N$^T$   $s_N^1, ..., s_N^f$

Ermitteln von f
Reduktions-
verschiebungswerten

14   $b^1, ..., b^f$

17

2f+1
Operanden

Multioperanden-Addierer
für die 2f+1 Operanden

18

19

aktualisiertes
Zwischenergebnis Z´

FIG 1

f=2; 5 Operanden

$$Z' = 2^{(s_Z^2 + s_Z^1)} \cdot Z + 2^{s_Z^2} \cdot a^1 \cdot C +$$

$$\underbrace{\phantom{2^{(s_Z^2 + s_Z^1)} \cdot Z}}_{\text{Op 1}} \quad \underbrace{\phantom{2^{s_Z^2} \cdot a^1 \cdot C}}_{\text{Op 2}}$$

$$+ 2^{s_Z^2} \cdot b^1 \cdot 2^{s_N^1} \cdot N + a^2 \cdot C + b^2 \cdot 2^{s_N^2} \cdot N$$

$$\underbrace{\phantom{2^{s_Z^2} \cdot b^1 \cdot 2^{s_N^1} \cdot N}}_{\text{Op 3}} \quad \underbrace{\phantom{a^2 \cdot C}}_{\text{Op 4}} \quad \underbrace{\phantom{b^2 \cdot 2^{s_N^2} \cdot N}}_{\text{Op 5}}$$

FIG 2

21

FIG 3a

FIG 3b

FIG 3c

Transformieren des Moduls (N)
in einen transf. Modul ($N^T$) — 40

iteratives Abarbeiten der modularen
Multiplikation unter Verwendung
des transf. Moduls ($N^T$) und des
vorbest. Bruchteils des
transformierten Moduls — 42

Rücktransformieren des
transformierten Ergebnisses unter
Verwendung des Moduls (N) — 44

FIG 4

L(N$_T$) = m          L(N$_R$) = n - m

n-1          (n-1)-m                    0

N | 01XXX....X | XXXXX........XXXXXX | 000..0000 | 00..000 |

m-1          0

=: N$_T$          =: N$_R$          underflow buffer

## FIG 5 (Modul)

n-m+p-1          n-1                    0

N$^T$ | 01100...000 | YYYYY........YYYYYY | 000..0000 | 00..000 |

33          L(N$^T$) = n - m + p          underflow buffer

## FIG 6 (transformierter Modul)

44

n-m+p-1          n-1                    0

$\frac{2}{3}$N$^T$ | 0100.....00 | ZZZZZ.........ZZZZZ | 000...000 | 000..000 |

L($\frac{2}{3}$N$^T$) = n - m + p          underflow buffer

## FIG 7 ($\frac{2}{3}$N$^T$)

FIG 8 (Stand
der Technik)

START

b, sN ⟶ 1000

sN := 0 ⟶ 1010

ZDN := 2/3 · N ⟶ 1020

1030

JA ◁ n = 0 ODER $s_N$ = -k ▷ NEIN

n := n - 1 ⟶ 1040

sN := sN - 1 ⟶ 1060

ZDN := ZDN/2 ⟶ 1080

1100

Abs(Z) > ZDN ? — NEIN

JA

1140 — b := 0

b :=
2 · Z [SIGN] - 1 ⟶ 1120

n := n + sz ⟶ 1160

sN := sN + sz ⟶ 1180

1200

n > MAX - k ?

JA                    NEIN

cur_k :=
MAX - k + 1

cur_k := k

1240                    1220

ENDE

FIG 9 (Stand
der Technik)